Europäisches Patentamt

European Patent Office

Office européen des brevets

(11) Veröffentlichungsnummer : **0 147 562**
**B1**

(12) **EUROPÄISCHE PATENTSCHRIFT**

(45) Veröffentlichungstag der Patentschrift :
**11.10.89**

(51) Int. Cl.⁴ : **F 16 K   3/02**, F 16 K 11/065

(21) Anmeldenummer : **84112872.1**

(22) Anmeldetag : **25.10.84**

(54) **Durchgangs- oder Mehrwege-Ventil in Plattenbauweise.**

(30) Priorität : **27.12.83 DE 3347135**

(43) Veröffentlichungstag der Anmeldung :
**10.07.85 Patentblatt 85/28**

(45) Bekanntmachung des Hinweises auf die Patenterteilung : **11.10.89 Patentblatt 89/41**

(84) Benannte Vertragsstaaten :
**BE DE FR IT**

(56) Entgegenhaltungen :
**DE—A— 2 130 773**
**DE—A— 3 150 844**
**FR—A— 1 554 564**
**GB—A—   911 436**
**US—A— 2 893 684**

(73) Patentinhaber : **IDEAL-STANDARD GMBH**
**Euskirchener Strasse 80**
**D-5300 Bonn 1 (DE)**

(72) Erfinder : **Bergmann, Konrad, Dr.**
**zur Philippsburg 70**
**D-5560 Wittlich (DE)**

(74) Vertreter : **Gesthuysen, Hans Dieter, Dipl.-Ing. et al**
**Patentanwälte Gesthuysen + von Rohr Huyssenallee**
**15 Postfach 10 13 33**
**D-4300 Essen 1 (DE)**

## Beschreibung

Die Erfindung betrifft ein Durchgangs- oder Mehrwege-Ventil in Plattenbauweise, mit mindestens zwei ortsfesten äußeren Deckplatten, mit mindestens einem zwischen den äußeren Deckplatten vorgesehenen, einen Aufnahmeraum schaffenden Distanzstück und mit einer beweglichen planparallelen Steuerplatte, wobei die Deckplatten mindestens je eine Durchtrittsöffnung aufweisen, die Steuerplatte in dem durch das Distanzstück bzw. durch die distanzstückgeschaffenen Aufnahmeraum angeordnet ist und eine Dicke hat, die geringer ist als der lichte Abstand zwischen den Deckplatten, und die Durchtrittsöffnungen in den Deckplatten mittels der Steuerplatte ganz oder teilweise verschließbar oder voll miteinander in Überdeckung bringbar sind ; ein solches Ventil ist z. B. aus der GB-A-911 436 bekannt.

Ventile der zuvor beschriebenen Art finden bevorzugt in der Öl- und Wasserhydraulik Anwendung. Die Funktion dieser Ventile kann auch durch Ausführungen in Kolbenbauweise erfüllt werden, bei denen ein Steuerkolben mit geringem Spiel in einer Bohrung geführt ist. Da die Steuerplatten bzw. -kolben mit geringem Spiel zwischen den ortsfesten Ventilbauteilen laufen und die durch das Spiel bedingte Leckagegefahr so gering wie möglich gehalten werden muß, hängt die Qualität derartiger Ventile von der Einhaltung geringster Spalte und folglich auch geringster Fertigungstoleranzen ab, ohne daß die Leichtgängigkeit der beweglichen Steuerteile gefährdet werden darf.

Die Einhaltung geringster Fertigungstoleranzen bedingt aber bisher einen relativ hohen Kostenaufwand. Bei den bekannten Ventilen in Plattenbauweise wird der Spalt zwischen den Deckplatten und der Steuerplatte durch Distanzstücke erzielt, die um das Maß des Spaltes dicker sind als die Steuerplatte. Die Einhaltung dieser Maße im μm-Bereich ist, was leicht nachvollzogen werden kann, relativ aufwendig.

Der Erfindung liegt nun die Aufgabe zugrunde, den zuvor beschriebenen Nachteil zu beseitigen und ein Durchgangs- oder Mehrwege-Ventil in Plattenbauweise zu schaffen, das leicht herstellbar sowie einfach in seinen Ausbau und sicher in der Wirkungsweise ist.

Das erfindungsgemäße Durchgangs- oder Mehrwege-Ventil bei dem die zuvor dargestellte Aufgabe gelöst ist, ist dadurch gekennzeichnet, daß die Distanzstücke wie die Steuerplatte planparallel und von derselben Dicke wie die Steuerplatte sind und daß die zwischen den Deckplatten und den Distanzstücken zur Bildung eines definierten Spaltes zwischen den Deckplatten und der Steuerplatte eine Abstandsschicht befindet.

Eine bevorzugte Ausführungsform der erfindungsgemäßen Durchgangs- oder Mehrwege-Ventil ist dadurch gekennzeichnet, daß die Abstandsschicht aus einem Klebstoff mit Partikeln einer definierten Größe besteht, die der gewünschten Größe des Spaltes zwischen den Deckplatten und der Steuerplatte entspricht, und daß die so miteinander verklebten Bauteile — Deckplatten und Distanzstücke — mit der Steuerplatte eine prüffähige und montagefertige Baueinheit bilden. Im übrigen bestehen die Deckplatten, die Distanzstücke und die Steuerplatte vorzugsweise aus einem keramischen Werkstoff.

Ein bevorzugtes Verfahren zur Herstellung des erfindungsgemäßen Durchgangs- oder Mehrwege-Ventils ist dadurch gekennzeichnet, daß die Distanzstücke und die Steuerplatte aus einem einzigen planparallel bearbeiteten Werkstück mit durchgehend derselben Dicke hergestellt und später voneinander getrennt werden.

Bei dem erfindungsgemäßen Durchgangs- oder Mehrwege-Ventil können die den Spalt zwischen den Deckplatten und der Steuerplatte bildenden Abstandsschichten auf verschiedene Art erzeugt werden. Denkbar sind Beschichtungen der Deckplatten und/oder der Distanzstücke. Im Falle einer Beschichtung der Deckplatten werden Abdeckmasken im Laufbereich der Steuerplatte benötigt, damit dort keine Abstandsschicht aufgetragen wird. Bei einer alternativen Beschichtung der Distanzstücke muß darauf geachtet werden, daß die Zuordnung der Distanzstücke und der Steuerplatte, die bei der gemeinsamen Bearbeitung vorlag, erhalten bleibt, da Distanzstücke und Steuerplatten anderer zuordnungen maßlich erheblich abweichen können und im übrigen auch dürfen. Eine Kombination von Distanzstücken und Steuerplatten, die nicht gemeinsam bearbeitet worden sind, muß also vermieden werden.

Als besonders vorteilhaft hat sich zur Realisierung der Abstandsschicht ein Klebstoff erwiesen, der die Deckplatten und die Distanzstücke miteinander verbindet. Der ausgehärtete Klebstoff übernimmt bei einer späteren Druckbelastung der Deckplatten die auftretenden Kräfte. Die Druckfestigkeit des Klebstoffes ist ganz erheblich, da die Abstandsschichten im Bereich von 0,5 - 2 μm gehalten werden, wobei sich ein gesamter Spalt von ca. 1-4 μm ergibt. Die miteinander verklebten Bauteile können, wenn die Deckplatten metallisch sind und zugleich das Ventilgehäuse bilden, nach dem Aushärten des Klebstoffes fest verschraubt werden. Während des Aushärtens des Kelbstoffes darf lediglich eine mäßige, den überflüssigen Klebstoff verdrängende Kraft aufgebracht werden, um eine Zerstörung der den gewünschten Abstand garantierenden Partikel zu vermeiden. Für den Fall, daß die Deckplatten nicht zugleich das Ventilgehäuse bilden, ist die verklebte und prüfende Baueinheit sehr leicht in ein Gehäuse einsetzbar.

Die Abstandsschicht kann natürlich auch auf andere Art als zuvor beschrieben hergestellt werden. Denkbar sind Beschichtungen der Deckplatten und/oder der Distanzstücke durch chemische oder galvanische Abscheidungen sowie durch Abscheidungen im sogenannten PVD- und CVD-Verfahren.

Ein erfindungsgemäßes Durchgangs- oder Mehrwege-Ventil in Plattenbauweise ermöglicht im Gegensatz zu einem Ventil in Kolbenbauweise wegen der flachen, hinterschnittfreien Ausbildung der Deckplatten und der Distanzstücke eine einfache Herstellung aus Sinterwerkstoffen durch Pressen, Brennen und anschließende Flachbearbeitung. Von besonderem Interesse ist dabei die Anwendbarkeit von Aluminiumoxidkeramik oder von anderen Keramiken. Diese Werkstoffe unterliegen wegen ihrer großen Härte nur einem geringen oder gar keinem Verschleiß und können preiswert mit sehr feinen Rauhigkeits- und Ebenheitswerten ihrer flachen Oberflächen hergestellt werden. Die Oberflächenqualität hängt von der gewünschten Spalttoleranz ab. Bei engen Toleranzen kann die Rauhtiefe ohne weiteres unter $R_a$ = 0,1 μm gehalten werden. Für den Fall, daß die Distanzstücke und die Steuerplatte erfindungsgemäß aus einem einzigen planparallel bearbeiteten Werkstück mit durchgehend derselben Dicke hergestellt werden, kann die anschließende Trennung durch Sägen oder Laserritzen erfolgen. Ein Verzug der Bauteile ist dabei wegen des spannungsfreien Sintergefüges nicht zu befürchten.

Ein Durchgangs- oder Mehrwege-Ventil gemäß der Erfindung eignet sich über die Anwendung im Bereich der Hydraulik hinaus natürlich auch für andere Einsatzgebiete. So ist z. B. die Anwendung in der Pneumatik und hier insbesondere in der Hochdruckpneumatik vorstellbar. Ebenso kann ein derartiges Ventil auch als Mischventil für den Bereich der Sanitärarmaturen zur Anwendung gelangen.

Im folgenden wird die Erfindung anhand einer lediglich ein Ausführungsbeispiel darstellenden Zeichnung näher erläutert; es zeigen

Fig. 1 einen Längsschnitt durch ein erfindungsgemäßes Ventil, und zwar einen Mehrwege-Hochdruckschieber,

Fig. 2 in gegenüber der Fig. 1 vergrößerter Darstellung, die aus den Deckplatten, den Distanzstücken und der Steuerplatte bestehende Baueinheit des Ventils nach Fig. 1.

Fig. 3 einen Schnitt durch den Gegenstand nach Fig. 2 längs der Linie III-III.

Fig. 4 einen Schnitt durch den Gegenstand nach Fig. 2 längs der Linie IV-IV und

Fig. 5 den vergrößerten Ausschnitt A aus dem Gegenstand nach Fig. 2.

Zu dem in den Figuren dargestellten Ventil gehören zwei ortsfeste äußere Deckplatten 3, zwei zwischen den äußeren Deckplatten 3 vorgesehene, einen Aufnahmeraum schaffende Distanzstücke 4 und eine bewegliche planparallele Steuerplatte 5. Dabei weisen die Deckplatten 3 je eine Durchtrittsöffnung auf, ist die Steuerplatte 5 in dem durch die Distanzstücke 4 geschaffenen Aufnahmeraum angeordnet, hat die Steuerplatte 5 eine Dicke, die geringer ist als der lichte Abstand zwischen den Deckplatten 3 und sind die Durchtrittsöffnungen in den Deckplatten 3 mittels der Steuerplatte 5 ganz oder teilweise verschließbar oder voll miteinander in Überdeckung bringbar.

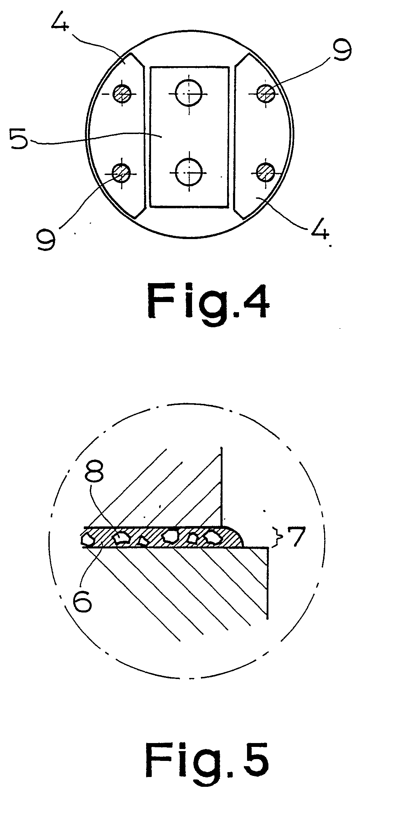

Erfindungsgemäß sind die Distanzstücke 4 wie die Steuerplatte 5 planparallel und von derselben Dicke wie die Steuerplatte 5 und befindet sich, wie insbesondere Fig. 5 zeigt, zwischen den Deckplatten 3 und den Distanzstücken 4 zur Bildung eines definierten Spaltes 7 zwischen den Deckplatten 3 und der Steuerplatte 5 eine Abstandsschicht 6.

Im dargestellten Ausführungsbeispiel besteht die Abstandsschicht 6 aus einem Klebstoff mit Partikel 8 einer definierten Größe, die der gewünschten Größe des Spaltes 7 zwischen den Deckplatten 3 und der Steuerplatte 5 entspricht und bilden die so miteinander verklebten Bauteile — Deckplatte 3 und Distanzstücke 4 — mit der Steuerplatte 5 eine prüffähige und montagefertige Baueinheit.

Vorzugsweise bestehen die Deckplatten 3, die Distanzstücke 4 und die Steuerplatte 5 aus einem keramischen Werkstoff. Bei der Herstellung des in den Figuren dargestellten Ventils ist so vorgegangen worden, daß die Distanzstücke 4 und die Steuerplatte 5 aus einem einzigen planparallel bearbeiteten Werkstück mit durchgehend derselben Dicke hergestellt und später voneinander getrennt worden sind.

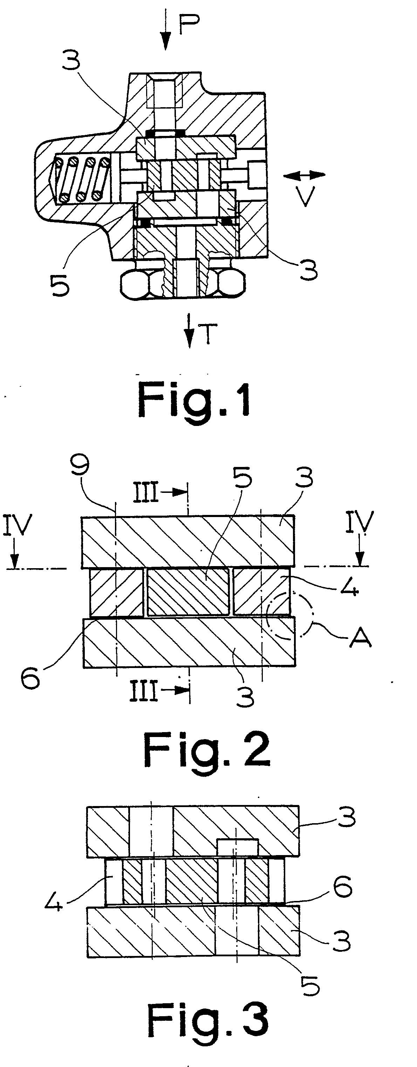

Im übrigen kann den Fig. 2 und 4, insbesondere der Fig. 4 entnommen werden, daß im dargestellten Ausführungsbeispiel die Deckplatten 3 und die Distanzstücke 4 über Zentrierstifte 9 miteinander in Verbindung stehen.

Zur Funktionsweise des in Fig. 1 dargestellten erfindungsgemäßen Ventils kurz folgendes :

Es handelt sich z. B. um ein Drei-Wege-Bremsventil, so daß ein Hochdruckanschluß P, ein Verbraucheranschluß V und ein Tankanschluß T verwirklicht sind. In der Mittelstellung der Steuerplatte 5 sind der Hochdruckanschluß P, der Verbraucheranschluß V und der Tankanschluß T gegeneinander gesperrt. Ist die Steuerplatte 5 nach rechts verschoben, so strömt Druckmedium vom Hochdruckanschluß P zum Verbraucheranschluß V. Ist die Steuerplatte 5 hingegen nach links verschoben, so kann Druckmedium vom Verbraucheranschluß V zum Tankanschluß T fließen.

**Patentansprüche**

1. Durchgangs- oder Mehrwege-Ventil in Plattenbauweise, mit mindestens zwei ortsfesten äußeren Deckplatten (3), mit mindestens einem zwischen den äußeren Deckplatten (3) vorgesehenen, einen Aufnahmeraum schaffenden Distanzstück (4) und mit einer beweglichen planparallen Steuerplatte (5), wobei die Deckplatten (3) mindestens je eine Durchtrittsöffnung aufweisen, die Steuerplatte (5) in dem durch das Distanzstück bzw. durch die Distanzstücke (4) geschaffenen Aufnahmeraum angeordnet ist und eine Dicke hat, die geringer ist als der lichte Abstand zwischen den Deckplatten (3), und die Durchtrittsöffnungen in den Deckplatten (3) mittels der Steuerplatte (5) ganz oder teilweise verschließbar oder voll miteinander in Überdeckung bringbar sind, dadurch gekennzeichnet, daß die Distanzstücke (4) wie die Steuerplatte (5) planparallel und von derselben Dicke wie die Steuerplatte (5) sind und daß sich zwischen den Deckplatten (3) und den Distanzstücken (4) zur Bildung eines definierten Spaltes (7) zwischen den Deckplatten (3) und der Steuerplatte (5) eine Abstandsschicht (6) befindet.

2. Ventil nach Anspruch 1, dadurch gekennzeichnet, daß die Abstandsschicht (6) aus einem Klebstoff mit Partikeln (8) einer definierten Größe besteht, die der gewünschten Größe des Spaltes (7) zwischen den Deckplatten (3) und der Steuerplatte (5) entspricht, und daß die so miteinander verklebten Bauteile — Deckplatten (3) und Distanzstücke (4) — mit der Steuerplatte (5) eine prüffähige und montagefertige Baueinheit bilden.

3. Ventil nach Anspruch 1 oder 2, dadurch gekennzeichnet, daß die Deckplatten (3), die Distanzstücke (4) und die Steuerplatte (5) aus einem keramischen Werkstoff bestehen.

4. Verfahren zur Herstellung eines Ventils nach einem der Ansprüche 1 bis 3, dadurch gekennzeichnet, daß die Distanzstücke (4) und die Steuerplatte (5) aus einem einzigen planparallel bearbeiteten Werkstück mit durchgehend derselben Dicke hergestellt und später voneinander getrennt werden.

## Claims

1. A through-way valve or multiple-way valve of plate construction, with at least two stationary outer cover plates (3), with at least one distance piece (4) provided between the cover plates (3) and creating a reception space, and with a movable control plate (5) having parallel faces, in which each of the cover plates (3) possesses at least one passage opening, the control plate (5) is located in the reception space created by the distance piece or pieces (4) and has a thickness less than the clear spacing between the cover plates (3), and the passage openings in the cover plates (3), can be completely or partially closed or be brought into complete coincidence with one another by means of the control plate (5), characterized in that the distance pieces (4) like the control plate (5) have parallel faces and are of the same thickness as the control plate (5), and that a spacing layer (6) exists between the cover plates (3) and distance pieces (4) to form a defined gap (7) between the cover plates (3) and the control plate (5).

2. A valve according to Claim 1, characterized in that the spacing layer (6) consists of an adhesive material with particles (8) of a definite size that corresponds to the desired width of the gap (7) between the cover plates (3) and the control plate (5), and that the components that are stuck to one another in this way — the cover plates (3) and distance pieces (4) — form with the control plate (5) a component that can withstand test requirements and that is ready for assembly.

3. A valve according to Claim 1 or 2, characterized in that the cover plates (3), the distance pieces (4) and the control plate (5) consist of a ceramic material.

4. A process for the manufacture of a valve according to one of Claims 1 to 3, characterized in that the distance pieces (4) and the control plate (5) are manufactured as a single workpiece machined with parallel faces and of the same thickness throughout, and are subsequently separated from one another.

## Revendications

1. Vanne de passage ou à plusieurs voies selon un type de construction en plaques, qui présente au moins deux plaques de recouvrement externes fixes (3), qui a au moins une pièce d'écartement (4), disposée entre les plaques externes de recouvrement (3) et constituant une chambre d'admission et qui possède une plaque de commande (5) mobile et à faces planes et parallèles, les plaques de recouvrement (3) présentant au moins chacune une ouverture de passage, la plaque de commande (5) étant disposée dans la chambre d'admission constituée par la pièce d'écartement ou par les pièces d'écartement (4) et présentant une épaisseur qui est plus petite que la distance libre entre les plaques de recouvrement (3), les ouvertures de passage dans les plaques de recouvrement (3) pouvant être fermées totalement ou partiellement au moyen de la plaque de commande ou mises entièrement en superposition l'une sur l'autre, caractérisée en ce que les pièces d'écartement (4) sont à faces planes et parallèles comme la plaque de commande (5) et ont la même épaisseur que la plaque de commande (5) et en ce qu'une couche d'espacement (6) se trouve entre les plaques de recouvrement (3) et les pièces d'écartement (4) pour former un interstice défini (7) entre les plaques de recouvrement (3) et la plaque de commande (5).

2. Vanne suivant la revendication 1, caractérisée en ce que la couche d'espacement (6) est constituée par une colle avec des particules (8) d'une grosseur définie qui correspond à la grandeur souhaitée de l'interstice (7) entre les plaques de recouvrement (3) et la plaque de commande (5) et en ce que les pièces constitutives ainsi collées l'une à l'autre, plaques de recouvrement (3) et pièces d'écartement (4), constituent avec la plaque de commande (5) une unité modulaire contrôlable et prête à être montée.

3. Vanne suivant la revendication 1 ou 2, caractérisée en ce que les plaques de recouvrement (3), les pièces d'écartement (4) et la plaque de commande (5) sont constituées par un matériau céramique.

4. Procédé de fabrication d'une vanne suivant l'une des revendications 1 à 3, caractérisé en ce que les pièces d'écartement (4) et la plaque de commande (5) sont fabriquées à partir d'une pièce d'œuvre unique usinée à faces planes et parallèles ayant la même épaisseur de bout en bout et en ce qu'elles sont séparées l'une de l'autre ultérieurement.

EP 0 147 562 B1

Fig.1

Fig. 2

Fig.3

# Fig.4

# Fig.5